Europäisches Patentamt

European Patent Office

Office européen des brevets

(19)

(11) Veröffentlichungsnummer: **0 035 692**
**B1**

(12) **EUROPÄISCHE PATENTSCHRIFT**

(45) Veröffentlichungstag der Patentschrift:
27.03.85

(21) Anmeldenummer: 81101337.4

(22) Anmeldetag: 25.02.81

(51) Int. Cl.⁴: **G 01 S 13/74, H 04 B 1/59**

(54) Vorrichtung zur Erzeugung des Antwortsignals bei einer Einrichtung zur automatischen Identifizierung von Objekten und/oder Lebewesen.

(30) Priorität: 11.03.80 DE 3009179

(43) Veröffentlichungstag der Anmeldung:
16.09.81 Patentblatt 81/37

(45) Bekanntmachung des Hinweises auf die Patenterteilung:
27.03.85 Patentblatt 85/13

(84) Benannte Vertragsstaaten:
AT BE CH FR GB IT LI NL SE

(56) Entgegenhaltungen:
EP - A - 0 025 816
DE - A - 2 134 678
DE - A - 2 625 017
DE - A - 2 747 388
DE - B - 2 524 571
DE - B - 2 535 410
US - A - 3 945 006

(73) Patentinhaber: BROWN, BOVERI & CIE
Aktiengesellschaft Mannheim, Kallstadter Strasse 1,
D-6800 Mannheim Käfertal (DE)

(72) Erfinder: Strietzel, Rainer, Schnepfengrund 8,
D-6900 Heidelberg (DE)

(74) Vertreter: Kempe, Wolfgang, Dr. et al, c/o Brown, Boveri
& Cie AG Postfach 351, D-6800 Mannheim 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung bezieht sich auf eine Vorrichtung gemäß dem Oberbegriff des Patentanspruches 1.

Einrichtungen zur automatischen Identifizierung sind bereits aus der DE-OS 2 736 217 und der DE-OS 2 508 201 bekannt. Diese Einrichtungen strahlen von einem ortsfesten Abfragegerät einen Energiestrahl auf das Antwortgerät, welches an dem zu identifizierenden Objekt befestigt ist. Diese Energie wird von einer Energieempfangseinrichtung, z. B. einer Antenne, aufgenommen und von einer Gleichrichterschaltung in eine Versorgungsspannung umgewandelt, die zur Versorgung der Schaltungseinheit im Antwortgerät dient. Sobald die eingestrahlte Energie im Antwortgerät ausreicht, um einen sicheren Betrieb des Antwortgerätes zu ermöglichen, strahlt das Antwortgerät über einen Sender die in ihm gespeicherten Informationen aus. Zu diesem Zweck befindet sich im Antwortgerät ein Festwertspeicher und ggf. ein extern veränderbarer Zusatzspeicher. Im Festwertspeicher sind die veränderlichen Daten des zu identifizierenden Objekts enthalten. Im veränderbaren Speicher werden bei Bedarf zusätzliche Daten wie Bestimmungsort, Absendeort usw. eingespeichert.

Die bekannten Einrichtungen ermöglichen eine Befestigung der verwendeten Antwortgeräte an Objekten und/oder Lebewesen. Sie können zu beliebigen Zeiten an beliebig wählbaren Orten automatisch, zerstörungsfrei und berührungslos abgefragt werden. Nachteilig ist jedoch, daß sie bei jeder beliebigen Einstrahlung von Energie aktiviert werden und ihre gespeicherten Daten aussenden. Ein solches Verhalten ist jedoch nicht immer erwünscht.

Das Antwortgerät der erfindungsgemäßen Vorrichtung ist ebenfalls für eine Befestigung an Objekten und/oder Lebewesen vorgesehen und wird durch einen von dem Abfragegerät ausgesandten Energiestrahl mit der erforderlichen Energie versorgt. Die Ausführung der Antwortgeräte erfolgt in integrierter Halbleiter-, Dick- oder Dünnfilmtechnik.

Die erfindungsgemäße Vorrichtung geht speziell von einer Einrichtung aus, wie sie nach EP-A-25 816 gemäß EPÜ Art. 54(3) — und zwar gemäß Art. 54(4) für die Staaten CH, FR, GB, IT, LI, SE — zum Stand der Technik zählt.

Der im Antwortgerät enthaltene Kennzeichensender muß aus empfangstechnischen und gesetzlichen Gründen sein Antwortsignal mit hoher Frequenzgenauigkeit abstrahlen. Freilaufende Oszillatoren, beispielsweise RC-Oszillatoren, besitzen in einfachen Schaltungen eine große Temperaturabhängigkeit. Schaltungen, bei denen die Temperaturabhängigkeit kompensiert wird, sind wegen der geringen zur Verfügung stehenden Speiseenergie nicht einsetzbar. Die Verwendung von Schwingquarzen verbietet sich aufgrund des Raumbedarfs der Quarze sowie der zusätzlichen Montagekosten.

Der Erfindung liegt die Aufgabe zugrunde, eine Vorrichtung zum Erzeugen eines vom Kennzeichensender des Antwortgeräts auszusendenden Antwortsignals mit hoher Frequenzstabilität bei geringem Schaltungsaufwand anzugeben.

Diese Aufgabe wird erfindungsgemäß durch die kennzeichnenden Merkmale des Patentanspruches 1 gelöst.

Durch die Verwendung eines Öffnungscodes zusätzlich zur Energieeinstrahlung wird eine wesentlich erhöhte Sicherheit gegen unbefugte Abfrage der im Antwortgerät gespeicherten Daten erreicht. Andererseits ist die befugte Abfrage der gespeicherten Daten gegenüber dem Verfahren bei den bisherigen Einrichtungen nicht erschwert. Die gesamte elektronische Schaltungseinheit des Antwortgerätes läßt sich in Miniaturform z. B. als integrierte Halbleiterschaltung oder als Dünnschicht-Schaltung herstellen. Vorteilhaft ist auch, daß eine nachträgliche, unbefugte Manipulation an der elektronischen Schaltungseinheit des Antwortgerätes zu deren Zerstörung führt und damit Manipulationen unmöglich macht.

Die erfindungsgemäße Einheit bekommt dadurch Eigenschaften, wie sie z. B. von Gebäude-Schließanlagen allgemein bekannt sind; auch bei diesen Anlagen passen manche Schlüssel in alle Schlösser, andere Schlüssel nur in bestimmte Schlösser und beispielsweise nur ein einziger Schlüssel in ein bestimmtes Schloß. Anwendungsfälle, die diese besonderen Eigenschaften der erfindungsgemäßen Einrichtung ausnützen, werden weiter unten näher erläutert.

Der für die Erzeugung des Antwortträgersignals benötigte Oszillator hat seinen Platz im Abfragegerät und kann deshalb die Frequenz mit jeder gewünschten Genauigkeit erzeugen. Da die vom Energiesender ausgestrahlte Energiewelle eine relativ hohe Intensität hat, kann auch das Antwortträgersignal mit hoher Intensität aufmoduliert werden, so daß das im Antwortgerät von der Energiewelle getrennte Antwortträgersignal ohne weitere Verstärkung wieder ausgestrahlt werden kann.

Eine Verdoppelung der Frequenz des Antwortträgersignals im Abfragegerät läßt eine einfache Rückgewinnung des ursprünglichen Signals im Antwortgerät zu.

Vorzugsweise wird die Energiewelle mit dem Antwortträgersignal amplitudenmoduliert. Modulatoren und Demodulatoren für Amplitudenmodulation sind besonders einfach. Gemäß einer Weiterbildung wird die Energiewelle mit dem Antwortträgersignal frequenzmoduliert; die Demodulation im Antwortgerät erfolgt dann vorzugsweise mittels Flankendemodulator.

Vorzugsweise wird das im Antwortgerät von der Energiewelle getrennte Antwortträgersignal mit dem im Kennzeichen-Speicher gespeicherten Kennzeichen amplitudenmoduliert. Dies hat den Vorteil, daß der Modulator gleichzeitig auch zur Sperrung des Kennzeichen-Senders bei Nichtübereinstimmung der Öffnungscode verwendet werden kann.

Gemäß einer vorteilhaften Weiterbildung wird im Abfragegerät das Antwortträgersignal seinerseits mit dem Öffnungscodesignal moduliert, vorzugsweise puls-dauer-moduliert. Dadurch ist es möglich, alle Signale über eine einzige Antenne abzustrahlen. Die Puls-Dauer-Modulation ermöglicht die Verwendung von Demodulatoren in Digital-Technik, die besonders störfrei arbeiten.

Vorzugsweise wird im Abfragegerät zur Verstärkung und Demodulation des vom Antwortgerät kommenden Antwortsignals ein aus den Antwortträgersignal abgeleitetes Überlagerungssignal verwendet. Auf diese Weise wird nicht nur der Einsatz von Synchron-Demodulatoren ermöglicht; vielmehr haben Änderungen der Frequenz des Antwortträgersignalgenerators und die damit gleichlaufenden Änderungen der Frequenz des Kennzeichen-Senders keinen Einfluß auf den Empfang und die Verarbeitung des Antwortsignals, da auch das aus dem Antwortträgersignal abgeleitete Überlagerungssignal derselben Frequenzänderung unterliegt. Hochstabile Oszillatoren sind deshalb nicht erforderlich; außerdem kann die Demodulation des Antwortsignals mit Hilfe von taktgesteuerten Digital-Schaltungen erfolgen, die so eine hohe Störsicherheit erhalten.

Das Antwortgerät enthält zusätzlich ein Antwortträgersignalfilter.

Eine bevorzugte Anwendung der erfindungsgemäßen Einrichtung ist die Freund-Feind-Erkennung bei miltärischen Geräten oder die Fernerkennung und Identifizierung von militärischen Personen. Nachdem heute bereits Codes bekannt sind, die nicht brechbar sind — sei es aufgrund einer mathematischen Verschlüsselung, sei es aufgrund der extrem hohen Anzahl von Kombinationsmöglichkeiten — ist eine sichere Identifizierung gewährleistet. Dabei ist es möglich, mit einem einfachen Code nur den Öffnungscode-Speicher zu öffnen, so daß der Kennzeichen-Speicher ein Kennzeichen zur Freund-Feind-Erkennung abgibt. Durch einen zusätzlichen Öffnungscode kann ein Öffnungscode-Zusatzspeicher aktiviert werden, wodurch auch ein Kennzeichen-Zusatzspeicher seine Zusatzkennzeichen aussendet. Damit können beispielsweise zusätzliche Daten wie militärische Einheit des Gerätes bzw. der Person, Kampfauftrag, aktuelle Kampfkraft, Munitionsvorrat usw. zusätzlich abgefragt und in einer zentralen Datenverarbeitung berücksichtigt werden.

Bei einer Anwendung bei militärischen Personen beispielsweise in der Erkennungsmarke können auch persönliche Daten wie Geburtsdaten, Blutgruppe, Impfungen, Allergien, überstandene Krankheiten, Arzneimittelunverträglichkeiten usw. gespeichert werden. Um diese Daten abfragen zu können, müssen Sanitäter und Ärzte mit einem tragbaren Abfragegerät ausgerüstet sein. Durch entsprechende Codierung kann verhindert werden, daß das einem Sanitäter an die Front mitgegebene Gerät eine Abfrage von rein militärischen Daten ermöglicht, so daß auch dann, wenn ein solches Gerät dem Feind in die Hände fallen sollte, er mit diesem Gerät nichts anfangen kann.

Ein weiteres bevorzugtes Anwendungsgebiet ist die Herstellung von fälschungssicheren Kraftfahrzeugkennzeichen, die auch zur Fernerkennung geeignet sind. Sobald alle Kraftfahrzeuge mit einer erinfindungsgemäßen Einrichtung ausgerüstet sind, ist es möglich, an beliebigen Orten, z. B. Autobahnauffahrten, Brücken, Kreuzungen, Ampeln, Streifenfahrzeugen, z. B. während einer Ringfahndung oder auch an Grenzübergangsstellen eine unbemerkte Kontrolle durchzuführen. Die Abfragegeräte strahlen das Energiefeld und den Öffnungscode ab, worauf die Abfragegeräte an den Kraftfahrzeugkennzeichen zur Abgabe ihrer gespeicherten Kennzeichen veranlaßt werden. Die vom Antwortgerät empfangenen Kennzeichen werden ständig über Funk an einen Zentralcomputer weitergegeben und mit den Fahndungslisten automatisch verglichen. Sobald ein gesuchtes Kraftfahrzeug erkannt ist, erfolgt eine Rückmeldung, worauf die Sicherstellung des betreffenden Kraftfahrzeuges veranlaßt werden kann.

Da in dem Kennzeichen-Speicher und gegebenenfalls den Kennzeichen-Zusatzspeichern alle Daten eines Kraftfahrzeuges und nicht nur die Daten des Kennzeichens selbst gespeichert werden können, ist die Montage fremder Kennzeichen an einem Kraftfahrzeug nicht möglich. Auch das Anbringen gestohlener Kraftfahrzeugkennzeichen an einer sogenannten Doublette, d. h. an einem Fahrzeug der gleichen Baureihe und des gleichen äußeren Erscheinungsbildes, wie es in Terroristenkreisen allgemein üblich ist, wird durch die allgemeine Verwendung von erfindungsgemäß, fälschungssicherausgerüsteten KFZ-Kennzeichen unmöglich gemacht. Selbst die Verwendung eines gefälschten KFZ-Kennzeichens ohne eingebautes Antwortgerät führt zu einer Erkennung, da ein solches Kennzeichen auf einen einfallenden Energiestrahl kein Antwortsignal abgibt.

Unter KFZ-Kennzeichen ist hier nicht nur das herkömmliche Nummernschild zu verstehen, sondern auch jedes andere Kennzeichen, z. B. eine erfindungsgemäß präparierte Fensterscheibe etc.

Bei Installationen eines Abfragegerätes in einer überwachten Ampel oder in einer Radargeschwindigkeitskontrollanlage erhält man zusätzliche Daten über das Kraftfahrzeug, das die Verkehrsübertretung begangen hat. Unter Umständen kann auf eine Fotografie verzichtet werden.

Auf diese Weise können auch Verkehrszählungen mit zusätzlicher Erfassung von Einzelangaben, z. B. Standort, Alter, Typ der Fahrzeuge usw. durchgeführt werden.

Eine weitere Möglichkeit besteht bei der Observationsverfolgung. Hier kann der Weg eines KFZ vollautomatisch und zentral verfolgt werden.

Zusätzlich kann auch jedes Kraftfahrzeug selbst mit einem erfindungsgemäß arbeitenden Antwortgerät ausgerüstet werden. Zusammen mit einem erfindungsgemäß ausgerüsteten Kraftfahrzeugkennzeichen ist eine unbemerkbare Trennung von Kennzeichen und zugehörigem Fahrzeug nicht mehr möglich. Gefälschte oder gestohlene Kennzeichen führen im Abfragegerät zu unterschiedlichen Anzeigen, die sofort durch einen einfachen Code-Vergleich erkannt und angezeigt werden.

Zusätzlich lassen sich auch die Kraftfahrzeugpapiere mit einer erfindungsgemäßen Einrichtung ausrüsten. Dadurch wird die Fälschungs- und Diebstahlsicherheit noch weiter erhöht, wobei als wesentlicher Vorzug gegenüber anderen bereits üblichen oder auch vorgesehenen Lösungen die Möglichkeit der berührungslosen, unsichtbaren Fernabfrage und die Möglichkeit zur vollautomatischen Überprüfung der abgefragten Daten in einem zentralen Computer besteht.

Ein weiteres großes Anwendungsgebiet ist die Herstellung von fälschungssicheren und jederzeit automatisch abfragbaren personenbezogenen Papieren, d. h. von Personalausweisen, Reisepässen, Scheckkarten, Notfallausweisen, Firmenausweisen usw. Bei Verwendung in Personaldokumenten könnte dann unter Umständen auf das Vorzeigen der Papiere verzichtet werden, da die Ausweise auch dann automatisch abgefragt werden können, wenn sie sich optisch unsichtbar in einer Anzugs- oder Handtasche befinden.

Es sind heute bereits Geldausgabeautomaten bei verschiedenen Bankinstituten in Gebrauch, die durch Einwurf einer Kundenkarte und durch Eintasten einer persönlichen Codezahl zur Ausgabe von Bargeld veranlaßt werden können. Die Kundenkarte ist eine Plastikkarte in der Größe einer Euroscheckkarte, die neben den auf der Vorderseite visuell erkennbaren Daten eine Magnetstreifen-Codierung auf der Rückseite trägt, die automatisch gelesen werden kann. Auf dem Magnetstreifen sind Kundenkenndaten, Kontonummer, Abhebungszeitraum, Betragslimit und die nur dem Kunden bekannte Codezahl gespeichert. Durch die Speicherung insbesondere der Codezahl auf dem praktisch frei zugänglichen Magnetstreifen besteht jedoch keine große Sicherheit gegen Fälschungen, da die Magnetisierung des Magnetstreifens jederzeit ausgelesen werden kann. Bei Verwendung eines erfindungsgemäßen Antwortgerätes wird die Codezahl jedoch erst dadurch zugänglich, daß vom Geldausgabeautomaten ein geheimer Öffnungscode ausgesandt wird.

Ein weiteres großes Anwendungsgebiet der erfindungsgemäßen Einrichtung ist die Sicherung von Wert- und Museumsgegenständen sowie von Waren in Geschäften gegen Diebstahl. Hierzu wird das Antwortgerät an den betreffenden Gegenständen oder Waren angebracht.

Im Falle der reinen Diebstahlsicherung bleibt das Antwortgerät an dem zu schützenden Objekt im ständig strahlenden Energiefeld des Abfragegerätes. Wird der Gegenstand aus dem gegebenenfalls einstellbaren Bereich des Energiefeldes gebracht, bricht die Verbindung zum Kennzeichenempfänger sofort ab, und es wird Alarm ausgelöst. Gelingt es dem Täter trotzdem, den Gegenstand aus dem Gebäude zu bringen, so kann der Gegenstand jederzeit mit transportablen Fernabfragegeräten verfolgt, geortet und identifiziert werden.

Im Falle der Anwendung der erfindungsgemäßen Einrichtung zur Diebstahlsicherung in Warenhäusern, Leihbibliotheken usw. wird das Abfragegerät am Ausgang aufgestellt. Sobald ein Gegenstand in das Energiefeld des Abfragegerätes gelangt, von dem das mit dem erfindungsgemäßen Antwortgerät ausgerüstete Preisetikett oder die entsprechend ausgerüstete Verleihkarte nicht entfernt ist, wird Alarm ausgelöst.

Die genannten Anwendungsfälle für eine Diebstahlsicherung dienen nur als Beispiele. Eine entsprechende Anwendung ist auch bei vielen anderen Gegenständen möglich. Auch Tiere und Menschen, z. B. Entführungsopfer, können mit erfindungsgemäßen Antwortgeräten versehen z. B. durch Verschlucken der Einheit (Energiequelle ist in diesem Fall eine Batterie) und damit auch aus der Ferne verfolgt, geortet und identifiziert werden. Dabei ist von besonderem Vorteil, daß das Antwortgerät nur dann ein Signal aussendet, wenn der richtige Öffnungscode eingestrahlt wird. Dadurch ist eine Ortung des Gerätes durch Unbefugte aufgrund einer dauernd ausgesandten Strahlung, wie es beispielsweise bei herkömmlichen Minispionen der Fall ist, praktisch nicht möglich.

Ein weiteres Anwendungsgebiet besteht bei der Gruppe der Zahlungsmittel, d. h. bei Münzen, Geldscheinen, Scheckformularen usw. Hier können mit Hilfe der Öffnungscode-Speicher und der Öffnungscode-Zusatzspeicher sowie der Kennzeichen-Speicher und der Kennzeichen-Zusatzspeicher mehrere Sicherheitsbereiche geschaffen werden. Mit einem einfachen Code kann beispielsweise auf elektronischem Wege eine Wert- und Echtheitserkennung vorgenommen werden. Durch eine zusätzliche Speicherung im Kennzeichen-Zusatzspeicher kann beispielsweise Raub- und Erpressergeld markiert werden, wobei diese Markierung nur von Polizei und Bankinstituten erkannt werden kann, da nur diesen der Öffnungszusatzcode bekanntgegeben wird. Eine dritte Sicherheitsstufe kann durch einen nur den Banken oder gar nur der Zentralbank bekannten Öffnungszusatzcode angesprochen werden.

Aus der DE-PS 1 696 245 ist bereits ein Verfahren zur Herstellung von Sicherheitspapier bekannt, bei dem ferromagnetische Speichermaterialien in das Notenpapier eingebracht werden. Es ist jedoch leicht einzusehen, daß wie oben im Fall der Kundenkarte bei Geldausgabeautomaten beschrieben die Codierung in diesem sogenannten Sicherheitspapier jederzeit und für jedermann zugänglich ist, so daß in Wirklichkeit keine große Sicherheit besteht.

Bei Ausrüstung von beispielsweise Banknoten mit dem erfindungsgemäßen Antwortgerät kann auch eine automatische Zählung und Sortierung des Geldes in entsprechenden Maschinen vorgenommen werden, ohne daß das Geld zuvor von Menschen sortiert und gebündelt werden muß. Zu diesem Zweck muß im Kennzeichen-Speicher lediglich der Wert der Banknote miteingespeichert sein. Ist außerdem auch die Seriennummer der Banknote eingespeichert, so kann diese laufend und vollautomatisch mit den in einem Zentralcomputer gespeicherten Seriennummern der umlaufenden oder der im Tresor liegenden Banknoten verglichen werden; bei fehlender Übereinstimmung wird Alarm ausgelöst. Aber auch gefälschte Banknoten ohne ein erfindungsgemäßes Antwortgerät fallen auf, da sie bei Einfall des Energiestrahls kein Antwortsignal aussenden. Echte Banknoten, bei denen nur das Antwortgerät defekt ist, können vollautomatisch aussortiert und der Vernichtung zugeführt werden.

Anhand der Zeichnung soll die Erfindung in Form von Ausführungsbeispielen näher erläutert werden. Es zeigt

Fig. 1 ein Ausführungsbeispiel des Aufbaus von Abfragegerät und Antwortgerät bei getrennter Übertragung von Energiewelle und Öffnungscode,

Fig. 2 ein Ausführungsbeispiel bei kombinierter Übertragung von Energiewelle und Öffnungscode zwischen Abfragegerät und Antwortgerät.

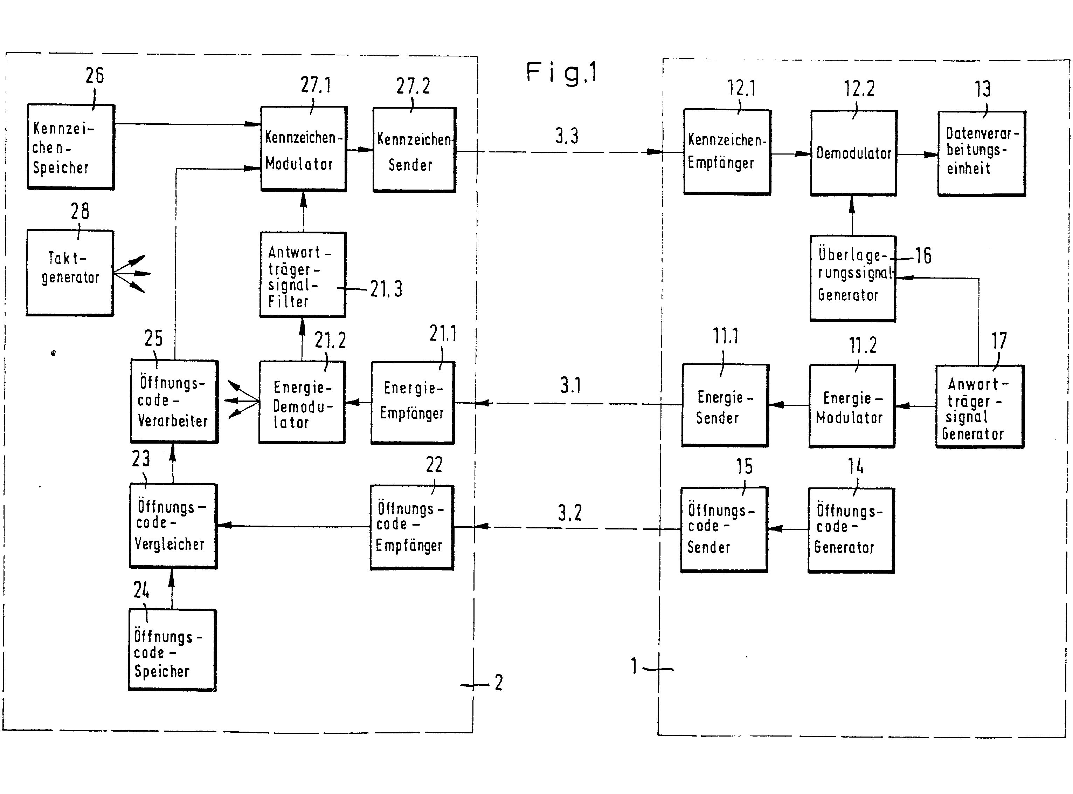

In Fig. 1 erkennt man als Blockschaltbild ein Abfragegerät 1, das ortsfest oder auch mobil eingesetzt werden kann. Es besteht im wesentlichen aus einem Energie-Sender 11.1, der einen Energiestrahl 3.1 aussendet. Weiterhin befindet sich im Abfragegerät 1 ein Öffnungscode-Generator 14. Der Öffnungscode wird vom Öffnungscode-Sender 15 als Öffnungscodesignal 3.2 ausgesendet. Weiterhin befindet sich im Abfragegerät 1 ein Kennzeichen-Empfänger 12.1, der über ein Antwortsignal 3.3 Daten von einem Antwortgerät 2 empfängt. Die vom Kennzeichen-Empfänger 12.1 empfangenen Daten werden in einer Datenverarbeitungseinheit 13 ausgewertet und gegebenenfalls angezeigt.

Im Abfragegerät 1 befindet sich außerdem ein Antwortträgersignalgenerator 17, der ein Antwortträgersignal erzeugt, welches über einen Energie-Modulator 11.2 die Energiewelle 3.1 des Energiesenders 11.1 moduliert. Der Modulator 11.2 ist ein Amplitudenmodulator.

Das Abfragegerät 1 enthält ferner einen Überlagerungssignalgenerator 16, der aus dem Antwortträgersignal ein Überlagerungssignal bildet, mit dessen Hilfe in einem Demodulator 12.2 das vom Kennzeichen-Empfänger 12.1 empfangene und vom Antwortgerät 2 kommende Antwortsignal demoduliert wird, bevor es der Datenverarbeitungseinheit 13 zugeführt wird.

Im Antwortgerät 2 befindet sich ein Energie-Empfänger 21.1, der die vom Energiesender 11.1 eingestrahlte Energie aufnimmt. In einem dem Energieempfänger 21.1 nachgeschalteten Energie-Demodulator 21.2 wird das Antwortträgersignal von dem Energiesignal getrennt. Das Energiesignal wird in eine Versorgungsspannung für die übrigen Baugruppen des Antwortgerätes 2 umgewandelt. Das Antwortträgersignal wird einem Antwortträgersignalfilter 21.3 zugeführt. Dieses Filter 21.3 kann als Tiefpaßfilter oder als Bandpaßfilter in Analog-Technik ausgebildet sein. Eine besonders einfache und platzsparende Lösung ergibt sich bei Ausbildung des Filters 21.3 in Digital-Technik.

In einem Kennzeichen-Modulator 27.1 wird das aus dem Antwortträgersignalfilter 21.3 kommende Antwortträgersignal mit dem aus einem Kennzeichen-Speicher 26 ausgelesenen Kennzeichen moduliert und über einen Kennzeichen-Sender 27.2 als Antwortsignal abgestrahlt. Wenn das auf der Energiewelle 3.1 übertragene Antwortträgersignal eine ausreichende Leistung besitzt, ist es nicht erforderlich, im Kennzeichen-Sender 27.2 eine Verstärkerstufe für das Antwortsignal vorzusehen, so daß der Bedarf des Antwortgerätes 2 an Versorgungsenergie sehr gering wird.

Der vom Öffnungscode-Sender 15 des Abfragegerätes 1 abgestrahlte Öffnungscode 3.2 wird in einem Öffnungscode-Empfänger 22 des Antwortgerätes 2 empfangen, demoduliert und an einen Öffnungscode-Vergleicher 23 weitergeleitet. Dieser vergleicht den empfangenen Öffnungscode mit dem in einem Öffnungscode-Speicher 24 gespeicherten Code. Bei Übereinstimmung der beiden Codes wird einen Öffnungscode-Verarbeiter 25, der ggf. mit dem Öffnungscode-Vergleicher 23 vereinigt sein kann, ein Signal an den Kennzeichen-Modulator 27.1 gegeben, worauf die Modulation des aus dem Filter 23.1 kommenden Antwortträgersignal mit dem aus dem Kennzeichen-Speicher 26 kommenden Kennzeichen freigegeben wird.

Im Antwortgerät 2 kann ferner ein zentraler Taktgenerator 28 angeordnet sein, der den logischen Ablauf der Datenverarbeitung in den einzelnen Baugruppen steuert und koordiniert. Es ist jedoch auch möglich, das Taktsignal ebenso wie das Antwortträgersignal von dem Abfragegerät 1 aus zu übertragen.

Zur Übertragung der Energiewelle des Antwortträgersignals und der Daten vom Abfragegerät 1 zum Antwortgerät 2 und zurück kann prinzipiell das ganze Spektrum der elektromagnetischen Wellen verwendet werden. Es ist jedoch zu berücksichtigen, daß eine hohe Übertragungsgeschwindigkeit erzielt werden muß und daß auch möglichst eine Bündelung der vom Energie-Sender 11.1 abgestrahlten Energie auf die Empfangsantenne des Antwortgerätes vorgenommen werden sollte, da diese naturgemäß in vielen Anwendungsfällen extrem klein ausgebildet werden muß und trotzdem eine hohe Energiedichte empfangen soll. Da gleichzeitig auch das Durchdringen von unterschiedlichen Gegenständen wie Kleidern, Isolierstoff usw. gewünscht wird, wird im allgemeinen der Mikrowellenteil des elektromagnetischen Spektrums für die Energiewelle verwendet werden.

Die Frequenz des Antwortträgersignals sollte

9    0 035 692    10

aus denselben Gründen möglichst hoch liegen. Um jedoch die Verarbeitung mit digitalen Bausteinen, die einen geringen Energiebedarf haben und nur eine kleine Versorgungsspannung benötigen, zu ermöglichen, sollte diese Frequenz möglichst niedrig liegen. Die Frequenz des Antwortträgersignals wird daher beim gegenwärtigen Stand der Technik auf dem Halbleitergebiet bei etwa 150 MHz liegen.

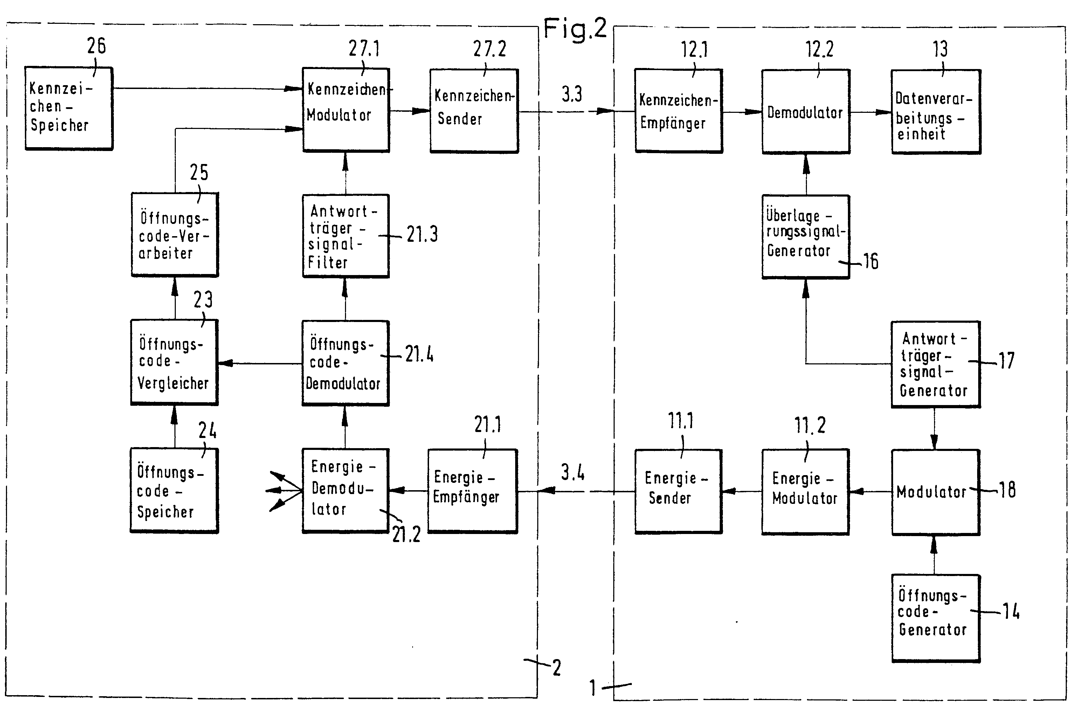

Fig. 2 zeigt ein Ausführungsbeispiel, bei dem ein Energiestrahl 3.4 nicht mehr mit dem Antwortträgersignal, sondern auch mit dem Öffnungscode-Signal moduliert ist. Hierzu wird das aus dem Antwortträgersignalgenerator 17 kommende Antwortträgersignal in einem weiteren Modulator 18 mit dem Öffnungscode-Speicher 14 kommenden Öffnungscode moduliert, um dann seinerseits mit Hilfe des Energie-Modulators 11.2 auf die Energiewelle des Energiesenders 11.1 aufmoduliert zu werden.

Der Modulator 18 ist als Puls-Dauer-Modulator ausgebildet. Die Puls-Dauer-Modulation hat den Vorteil, daß die Anfangsflanken der Impulse äquidistant sind; nur die Rückflanken werden moduliert. Aufgrund dieser Tatsache kann das Antwortträgersignal auf der Empfangsseite leicht dadurch wiedergewonnen werden, daß auf die Anfangsflanken getriggert wird.

Dies erfolgt im Antwortgerät 2 mit Hilfe des Öffnungscode-Demodulators 21.4, der den Öffnungscode vom Antwortträgersignal trennt und den Code an den Öffnungscode-Vergleicher 23, das Antwortträgersignal an das Antwortträgersignalfilter 21.3 weiterleitet. Bei Verwendung eines Flip-Flops an dieser Stelle wird eine zuvor im Abfragegerät 1 vorgenommene Frequenzverdopplung wieder rückgängig gemacht.

Die übrigen Baugruppen funktionieren so, wie es anhand der Fig. 1 beschrieben ist. Die wesentliche Verbesserung gegenüber bekannten Geräten besteht darin, daß im Antwortgerät kein Oszillator für das Antwortträgersignal nötig ist, da das Antwortträgersignal vom Abfragegerät 1 aus übertragen und vom Antwortgerät 2 lediglich wieder abgestrahlt wird. Dadurch ist eine Vereinfachung der Schaltung und eine Verringerung des Energiebedarfs und des Volumens der Antwortgeräte möglich.

## Patentansprüche

1. Vorrichtung zur Erzeugung des Antwortsignals einer Einrichtung zur automatischen Identifizierung von Objekten und/oder Lebewesen, die ein ortsfestes Abfragegerät (1) und ein am Objekt bzw. Lebewesen befestigtes Antwortgerät (2) umfaßt, wobei das Abfragegerät (1) einen Energiesender (11.1) für die Energieversorgung des Antwortgerätes (2), einen Kennzeichenempfänger (12.1) für den Empfang des vom Antwortgerät (2) kommenden Antwortsignals (3.3), eine Antenne, eine als Datenverarbeitungseinheit für das empfangene Antwortsignal dienende Auswerteeinheit (13) sowie einen Öffnungscodegenerator (14) und einen Öffnungscodesender (15) aufweist, und das Antwortgerät (2) einen Energieempfänger und -wandler (21.1) für die vom Abfragegerät (1) ausgesendete Versorgungsenergie, einen Kennzeichenspeicher (26), einen Taktgenerator (28) und eine einen Kennzeichensender (27.2) enthaltende Schaltungseinheit und eine Antenne umfaßt sowie einen Öffnungscodeempfänger (22), einen Öffnungscodespeicher (24) und einen Öffnungscodevergleicher (23) enthält, die mit den übrigen Baugruppen des Antwortgerätes (2) so verschaltet sind, daß ein im Kennzeichenspeicher (26) gespeichertes Kennzeichen nur dann vom Kennzeichensender (27.2) abgestrahlt wird, wenn der vom Abfragegerät (1) abgestrahlte und der im Antwortgerät (2) gespeicherte Öffnungscode übereinstimmen, dadurch gekennzeichnet, daß im Abfragegerät (1) ein Antwortträgersignalgenerator (17) und ein Energiemodulator (11.2) zur Modulation des vom Energiesender (11.1) abgestrahlten Energiestrahls (3.1) mit dem Antwortträgersignal enthalten ist, und das Antwortgerät (2) einen dem Energieempfänger (21.1) nachgeschalteten Energiedemodulator (21.2) sowie einen Modulator (27.1) zur Modulation des Antwortträgersignals mit dem Kennzeichen aufweist, und daß der Kennzeichensender (27.2) zum Abstrahlen des modulierten als Antwortsignal dienenden Antwortträgersignals vorgesehen ist.

2. Vorrichtung nach Anspruch 1, dadurch gekennzeichnet, daß das Abfragegerät (1) einen Überlagerungssignalgenerator (16), der aus dem Antwortträgersignal ein Überlagerungssignal erzeugt, und einen dem Kennzeichenempfänger (12.1) zugeordneten Demodulator (12.2) enthält, der das Antwortsignal mit Hilfe des Überlagerungssignals demoduliert.

3. Vorrichtung nach Anspruch 1 oder 2, dadurch gekennzeichnet, daß das Abfragegerät (1) einen weiteren Modulator (18) enthält, der das Ausgangssignal des Öffnungscodegenerators (14) auf das Antwortträgersignal aufmoduliert, bevor dieses auf den Energiestrahl (3.4) aufmoduliert wird, und daß das Antwortgerät (2) einen Öffnungscodedemodulator (21.4) enthält, der den Öffnungscode vom Antwortträgersignal trennt.

4. Vorrichtung nach Anspruch 3, dadurch gekennzeichnet, daß der weitere Modulator (18) ein Puls-Dauer-Modulator ist.

5. Vorrichtung nach einem der Ansprüche 1 bis 4, dadurch gekennzeichnet, daß der Energie- und der Antwortsignalmodulator (11.2, 27.1) als Amplitudenmodulatoren ausgebildet sind.

6. Vorrichtung nach einem der Ansprüche 1 bis 5, dadurch gekennzeichnet, daß im Abfragegerät (1) Energiesender (11) und Öffnungscodesender (15) vereinigt sind.

7. Vorrichtung nach einem der Ansprüche 1 bis 6, dadurch gekennzeichnet, daß im Antwortgerät (2) Energieempfänger (21) und Öffnungscodeempfänger (22) vereinigt sind.

8. Vorrichtung nach einem der Ansprüche 1 bis 7, dadurch gekennzeichnet, daß zwischen

6

Öffnungscodevergleicher (23) und Kennzeichensender (27) ein Öffnungscode-Verarbeiter (25) angeordnet ist.

9. Vorrichtung nach einem der Ansprüche 1 bis 8, dadurch gekennzeichnet, daß der vom Energiesender (11.1) ausgesendete Energiestrahl durch das Antwortträgersignal amplitudenmoduliert oder frequenzmoduliert ist.

10. Vorrichtung nach Anspruch 9, dadurch gekennzeichnet, daß im Antwortgerät (2) zur Demodulation des frequenzmodulierten Antwortträgersignals ein Flankendemodulator vorgesehen ist.

## Claims

1. Device for generating the response signal of a device for the automatic identification of objects and/or living beings, which device comprises a stationary interrogation unit (1) and a response unit (2), which is attached to the object or living being, the interrogation unit (1) being provided with a transmitter of energy (11.1) for supplying energy to the response unit (2), an identification receiver (12.1) for receiving the response signal (3.3) coming from the response unit (2), an antenna, an evaluation unit (13) which serves as the data processing unit for the response signal received, and an opening-code generator (14) and an opening-code transmitter (15), and the response unit (2) comprising a receiver and converter of energy (21.1) for the supply energy transmitted by the interrogation unit (1), an identification memory (26), a clock generator (28) and a circuit unit containing an identification transmitter (27.2) and an antenna and containing an opening-code receiver (22), an opening-code memory (24) and an opening-code comparator (23) which are connected to the other assemblies of the response unit (2) in such a manner that an identification stored in the identification memory (26) is radiated by the identification transmitter (27.2) only when the opening code radiated by the interrogation unit (1) agrees with the opening code stored in the response unit (2), characterised in that the interrogation unit (1) contains a response carrier signal generator (17) and an energy modulator (11.2) for modulating the energy beam (3.1), which is radiated by the energy transmitter (11.1), with the response carrier signal, and the response unit (2) is provided with an energy demodulator (21.1) which follows the energy receiver (21.1) in the circuit and with a modulator (27.1) for modulating the response carrier signal with the identification and that the identification transmitter (27.2) is intended for radiating the modulated response carrier signal serving as the response signal.

2. Device according to claim 1, characterised in that the interrogation unit (1) contains a heterodyne signal generator (16), which generates a herodyne signal from the response carrier signal, and a demodulator (12.2) which is associated with the identification receiver (12.1) and which demodulates the response signal with the aid of the heterodyne signal.

3. Device according to claim 1 or 2, characterised in that the interrogation unit (1) contains another modulator (18) which modulates the response carrier signal with the output signal of the opening-code generator (14) before the former is used to modulate the energy beam (3.4), and that the response unit (2) contains an opening-code demodulator (21.4) which separates the opening code from the response carrier signal.

4. Device according to claim 3, characterised in that the further modulator (18) is a pulse-duration modulator.

5. Device according to one of claims 1 to 4, characterised in that the energy modulator and the response-signal modulator (11.2, 27.1) are constructed as amplitude modulators.

6. Device according to one of claims 1 to 5, characterised in that the energy transmitter (11) and the opening-code transmitter (15) are combined in the interrogation unit (1).

7. Device according to one of claims 1 to 6, characterised in that the energy receiver (21) and the opening-code receiver (22) are combined in the response unit (2).

8. Device according to one of claims 1 to 7, characterised in that an opening-code processor (25) is arranged between the opening-code comparator (23) and the identification transmitter (27).

9. Device according to one of claims 1 to 8, characterised in that the energy beam transmitted by the energy transmitter (11.1) is amplitude-modulated or frequency-modulated by the response carrier signal.

10. Device according to claim 9, characterised in that an edge demodulator is provided in the response unit (2) for demodulating the frequency-modulated response carrier signal.

## Revendications

1. Dispositif pour produire le signal de réponse d'un dispositif d'identification automatique d'objets et/ou d'êtres vivants, qui comprend un appareil fixe de questionnement (1) et un appareil de réponse (2) fixé à l'objet ou à l'être vivant, l'appareil de questionnement (1) présentant un émetteur d'énergie (11.1) pour fournir de l'énergie à l'appareil de réponse (2), un récepteur de caractéristiques (12.1) pour la réception du signal de réponse (3.3) venant de l'appareil de réponse (2), une antenne, une unité d'exploitation (13) servant d'unité de traitement de données pour le signal de réponse reçu, ainsi qu'un générateur (14) de code d'ouverture et un émetteur (15) de code d'ouverture, tandis que l'appareil de réponse 2 inclut un récepteur et un convertisseur d'énergie (21.1) pour l'énergie d'alimentation envoyée par l'appareil de questionnement (1), un accumulateur de caractéristiques (26), un générateur de synchronisation (28) et une unité de commutation contenant un émetteur de caractéristiques (27.2) et une antenne, et contient un récepteur de code d'ouverture (22), un accumulateur de code d'ouverture (24) et un comparateur de code d'ouverture (23), qui sont reliés de telle manière, avec les autres groupes de composants de l'appareil de réponse (2), qu'une caractéristique emmagasinée dans l'accumulateur de caractéristiques (26) n'est émise par l'émetteur de caractéristiques (27.2) que lorsque le code d'ouverture émis par l'appareil de questionnement (1) et le code d'ouverture accumulé dans l'appareil de réponse (2) coïncident, dispositif caractérisé en ce que l'appareil de questionnement (1) contient un générateur de signal porteur de réponse (17) et un modulateur d'énergie (11.2) pour la modulation du faisceau d'énergie (3.1) rayonné par l'émetteur d'énergie (11.1) avec le signal porteur de réponse, et l'appareil de réponse (2) présente un démodulateur d'énergie (21.2) monté en aval du récepteur d'énergie (21.1) ainsi qu'un modulateur (27.1) pour la modulation du signal porteur de réponse avec la caractéristique, et en ce que l'émetteur de caractéristiques (27.2) est prévu pour émettre le signal porteur de réponse servant de signal de réponse.

2. Dispositif selon la revendication 1, caractérisé en ce que l'appareil de questionnement (1) contient un générateur de signal de superposition (16) qui produit un signal de superposition à partir du signal porteur de réponse, et un démodulateur (12.2) associé au récepteur de caractéristiques (12.1) et qui démodule le signal de réponse à l'aide du signal de superposition.

3. Dispositif selon la revendication 1 ou la revendication 2, caractérisé en ce que l'appareil de questionnement (1) contient un autre modulateur (18) qui module le signal de sortie du générateur de code d'ouverture (14) sur le signal porteur de réponse avant que celui-ci soit modulé sur le faisceau d'énergie (3.4) et en ce que l'appareil de réponse (2) contient un démodulateur de code d'ouverture (21.4) qui sépare le code d'ouverture du signal porteur de réponse.

4. Dispositif selon la revendication 3, caractérisé en ce que l'autre modulateur (18) est un modulateur de durée d'impulsion.

5. Dispositif selon l'une des revendications 1 à 4, caractérisé en ce que le modulateur d'énergie et le modulateur de signal de réponse (11.2, 27.1) sont réalisés comme des modulateurs d'amplitude.

6. Dispositif selon l'une des revendications 1 à 5, caractérisé en ce que dans l'appareil de questionnement (1) sont réunis un émetteur d'énergie (11) et un émetteur de code d'ouverture (15).

7. Dispositif selon l'une des revendications 1 à 6, caractérisé en ce que dans l'appareil de réponse (2) sont réunis un récepteur d'énergie (21) et un récepteur de code d'ouverture (22).

8. Dispositif selon l'une des revendications 1 à 7, caractérisé en ce que, entre le comparateur de code d'ouverture (23) et l'émetteur de caractéristiques (27), on dispose un appareil de traitement (25) de code d'ouverture.

9. Dispositif selon l'une des revendications 1 à 8, caractérisé en ce que le faisceau d'énergie envoyé par l'émetteur d'énergie (11.1) est modulé en amplitude ou modulé en fréquence par le signal porteur de réponse.

10. Dispositif selon la revendication 9, caractérisé en ce que, dans l'appareil de réponse (2), on prévoit un démodulateur de flancs pour la démodulation du signal porteur de réponse modulé en fréquence.

Fig.1

Kennzei-chen-Speicher `26`

Kennzeichen-Modulator `27.1`

Kennzeichen-Sender `27.2`

`3.3`

Kennzeichen-Empfänger `12.1`

Demodulator `12.2`

Datenverar-beitungs-einheit `13`

Takt-generator `28`

Antwort-träger-signal-Filter `21.3`

Überlage-rungssignal Generator `16`

Öffnungs-code-Verarbeiter `25`

Energie-Demodu-lator `21.2`

Energie-Empfänger `21.1`

`3.1`

Energie-Sender `11.1`

Energie-Modulator `11.2`

Anwort-träger-signal Generator `17`

Öffnungs-code-Vergleicher `23`

Öffnungs-code-Empfänger `22`

`3.2`

Öffnungs-code-Sender `15`

Öffnungs-code-Generator `14`

Öffnungs-code-Speicher `24`

2

1

0 035 692

Fig.2

0 035 692

26 Kennzeichen-Speicher

27.1 Kennzeichen-Modulator

27.2 Kennzeichen-Sender

3.3

12.1 Kennzeichen-Empfänger

12.2 Demodulator

13 Datenverarbeitungs-einheit

25 Öffnungs-code-Verarbeiter

21.3 Antwort-träger-signal-Filter

16 Überlagerungssignal-Generator

23 Öffnungscode-Vergleicher

21.4 Öffnungs-code-Demodulator

17 Antwort-träger-signal-Generator

24 Öffnungs-code-Speicher

21.2 Energie-Demodulator

21.1 Energie-Empfänger

3.4

11.1 Energie-Sender

11.2 Energie-Modulator

18 Modulator

14 Öffnungs-code-Generator

2

1